# EUROPEAN PATENT APPLICATION

(11) **EP 3 937 059 A1**
(43) Date of publication of application: **12.01.2022**
(21) Application number: 20305788.0
(22) Date of filing: 08.07.2020
(51) Int. Cl.: G06F 40/237, G06F 40/284

(54) **DISAMBIGUATION FOR THE CLASSIFICATION OF LEXICAL ITEMS**

(71) Applicant: Avignon Universite, 84000 Avignon (FR)
(72) Inventor: JOURLIN, Pierre, 84130 LE PONTET (FR)
(74) Representative: Marks & Clerk France

(57) **Abstract**

The invention relates to the field of the classification of lexical items. More specifically, it relates to the disambiguation of the classification of lexical items that may belong to different classes. To this effect, the invention discloses the creation and the use of a tree of lexical items, wherein each node comprises a lexical item, and a number of classification into semantic classes. During the creation of the tree, when a user classifies a lexical item in a class, it increments the corresponding number of classification in the node comprising this lexical item, but also in each parent node.

## Description

### FIELD OF THE INVENTION

The invention relates to the field of the classification of lexical items. More specifically, it relates to the disambiguation of the classification of lexical items that may belong to different classes.

### BACKGROUND PRIOR ART

Lexical items are series of characters that form basic elements of a language. For example, they may be words, subparts of words, or series of words such as sentences.

In order to provide an efficient comprehension of the content of a text, lexical item can be classified. For example, lexical item, a word, or an ordered sequence of words, can be classified according to a shallow or deep syntactic class (proper noun, verb, adjective, subject, gender, tense...), according to a semantic class (positive vs negative assessment, real world entities, etc.) or according to any class that maybe useful for a specific task of natural language processing. A sentence can be classified as a declarative sentence, an interrogative sentence, an imperative sentence, etc...

Some lexical items may belong to several classes in several dimensions. Without any context, such lexical items are considered ambiguous. However, their occurrence in a text most usually refers to an unique entity in the author's mind and therefore to a unique class in each dimension. For example, the lexical item "vernal edema of lung", contrary to its subparts, is unambiguous and therefore any of its occurrences can be associated to a distinct syntactic class (e.g. "common name") and distinct semantic class (e.g. "disease"). On the other hand, some lexical items cannot, if taken alone, be unambiguously classified in a single category. For example, the word "Paris" may refer either to the city of Paris in France, the city of Paris in Texas, or the public figure Paris Hilton. It may therefore be classified in various classes such as "City", "First name", "French city", "American city", "proper noun", "common name" etc...

Such ambiguity can usually be removed by taking into account the context of the lexical item. For example, in the expressions "the city of Paris", or "Paris launches an audit", Paris can be classified as a city administration, while in the expression "Paris, considered as a jet-setter", Paris can be classified as a first name.

The classification of lexical items depending upon their contexts in a text is a very thorough task, because the number of possible contexts, nesting of the contexts and the lexical item themselves renders the definition of classification rules very complex.

To address this complexity, current researches in the classification of lexical items mainly rely on machine learning and statistical theories, that are frequently implemented with artificial neural networks and deep learning techniques. This is because neural networks are natural candidates to address complex problems, for which decision rules are a priori difficult to establish.

However, these approaches possess, by nature, a number of drawbacks.

Firstly, the neural networks are "opaque boxes": it is difficult to define explicit rules from the behavior of the neural networks. Therefore, in case of misclassification, it is nearly impossible to infer where the misclassification comes from, and correct the classification rule.

Secondly, neural networks require a huge amount of labeled data (i.e human classified text) to provide good results in difficult tasks. Therefore, they require very long and cumbersome annotation time by users to be efficient. Moreover, if this annotation phase can be performed once for general text corpuses (e.g. newspaper articles, classical literature, ...) when they are available, such as the classification of general English language, the annotation phase need to be done again for more specific corpuses, such as texts in a language with a smaller corpus of available text, or specific kinds of texts (for example, classifying lexical items for legal decisions, or medicine thesis require a specific learning).

Therefore, when a user wishes to train a classification algorithm based on neural networks for a specific corpus of texts such as legal decisions, medicine thesis, or a language that has few speakers, it needs to provide a complete annotation of the corpus, which is a long and cumbersome task. In certain case, the size of the corpus may even be too small to obtain a correct classification through neural networks for this kind of texts.

Finally, the solutions based on neural networks require large amounts of computing power and memory, as soon as the training set is large, which is generally the case for lexical item classification. Therefore, the training, and use of semantic classification require computing power and memory needs that are usually not compatible with personal computers, and can be reached only for online servers. This therefore also increases bandwidth needs, reduces the ability to use semantic classification, and raises issues in terms of data privacy.

There is therefore the need for a method and system for training and using a lexical item classification, that allows a user to understand and modify classification rules, facilitate annotator's work, but also requires a limited annotated data, computing power and memory for providing acceptable classification results.

### SUMMARY OF THE INVENTION

To this effect, the invention discloses a computer-implemented method for constructing a tree for classifying a lexical item, wherein: each node of the tree has an ordered sequence of lexical items ; the ordered sequence of lexical items of the root node of the tree comprises only said lexical item ; the ordered sequence of lexical items of in any node of the tree is a strict subset of the ordered sequence of lexical items of any child of said any node; each node of the tree further comprises a number of occurrences of classifications in one or more classes of said lexical item when belonging to the ordered sequence of lexical items of said each node; and said method comprising: displaying a text comprising said lexical item to a user ; letting the user define an ordered sequence of lexical items of the text comprising said single lexical item, and classify said lexical item into a class; incrementing the number of occurrences of said class in a node that comprises said ordered sequence, and in all the parent nodes of said node.

Advantageously, the computer-implemented method comprises, prior to letting the user define an ordered sequence of lexical items of the text comprising said single lexical item, a step of selecting said lexical item.

Advantageously, wherein said step of selecting said lexical item is performed by letting the user select said lexical item in the text.

Advantageously, said step of selecting said lexical item is performed by iteratively selecting all the lexical items of said text.

Advantageously, said step of selecting said lexical item is performed by selecting said lexical item as a lexical item in the text, for which no classification exist, or for which the tree does not comprise any node comprising a sequence of lexical items which is a context of said lexical item in the text, and only one class as a non-null number of classification occurrences.

Advantageously, the tree is retrieved from a collection of tree or, if it does not exist in said collection of trees, created by adding a root node with said lexical item, and added to said collection of trees.

Advantageously, each node of the tree but the root node comprises an ordered sequence of lexical items which is formed of a concatenation of the ordered sequence of lexical items of the parent node of said each node, and an additional lexical item.

Advantageously, if the node that comprises said ordered sequence does not exist in the tree, the method comprises, prior to incrementing the number of occurrences of said class in a node that comprises said ordered sequence: creating said node that comprises said ordered sequence; iteratively removing the first or the last lexical item of said ordered sequence, and creating a parent node with said ordered sequence, until an existing node comprising the modified ordered sequence is found in the tree.

Advantageously, the computer-implemented method further comprises, if the tree comprises a node having only one class with a non-null number of classification occurrences, a step of removing all the child nodes of said node having only one class with a non-null number of classification occurrences.

Advantageously, the computer-implemented method further comprises performing a creation of a prototype tree for classifying any lexical item in a class, said creation comprising replacing in each ordered sequence in each node said lexical item by an indication of a position of a lexical item of said class.

Advantageously, the computer-implemented method further comprises fusing a plurality of prototype trees into a fused prototype tree.

The invention also discloses a computer-implemented method for using a tree for classifying a lexical item in a text, wherein: each node of the tree has an ordered sequence of lexical items; the ordered sequence of lexical items of the root node of the tree comprises only said lexical item; the ordered sequence of lexical items of in any node of the tree is a strict subset of the ordered sequence of lexical items of any child of said any node; each node of the tree further comprises a number of occurrences of classifications in one or more classes of said lexical item when belonging to the ordered sequence of lexical items of said each node; and said method comprising: verifying the presence or absence, in the text, of one or more ordered sequences of lexical items respectively comprised in one or more node of the tree; if the presence of said one or more sequences is verified, and if at least one of said one or more node of the tree has a single class with a non-null number of classification occurrences, classifying said lexical item in said single class.

Advantageously, the computer-implemented is a computer-implemented method for segmenting lexical units of said text, said method comprising: using a first tree for classifying a first lexical unit of the text; using a second tree for classifying a second lexical unit of the text, said second lexical unit being a strict superset of said first lexical unit; if a number of occurrences of classification of the second lexical unit is higher than a number of occurrences of classification of the first lexical unit, segment the second lexical unit as a single lexical unit of the text.

The invention also discloses a computer program product comprising computer code instructions for executing a method according to one of the embodiments of the invention.

The invention also discloses a computing system comprising: at least one memory storing at least one tree for classifying lexical items, wherein: each node of the tree has an ordered sequence of lexical items; the ordered sequence of lexical items of the root node of the tree comprises only said lexical item; the ordered sequence of lexical items of in any node of the tree is a strict subset of the ordered sequence of lexical items of any child of said any node; each node of the tree further comprises a number of occurrences of classifications in one or more classes of said lexical item when belonging to the ordered sequence of lexical items of said each node; at least one processing logic configured to execute a method according to one of the embodiments of the invention.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1a and 1b represent two computing systems for creating or using a tree for classifying lexical item;
- Figures 2a and 2b represent two examples of a tree for classifying a lexical item in a number of embodiments of the invention ;
- Figure 3 represents an example of a computer-implemented method for constructing a tree for classifying a lexical item according to a number of embodiments of the invention ;
- Figure 4 represents an example of a tree for type of lexical items in a number of embodiments of the invention ;
- Figure 5 represents an example of a computer-implemented method for using a tree for classifying a lexical item according to a number of embodiments of the invention.

### DETAILED DESCRIPTION OF THE INVENTION

For the sake of clarity, few definitions of words and concepts that will be used through this disclosure are reminded below:
- A lexical item (also called semantic entry, semantic item, semantic unit, lexical unit, or lexical entry): in lexicography, a lexical item (or) is a single word, a part of a word, or a chain (ordered sequence) of word that forms the basic elements of a language lexicon ;
- A text is an ordered sequence of words that could be segmented into a sequence of lexical items according to a wide range of possible decisions. For example, the text "of others" comprises two lexical items "of" and "others", while the text " 'golden parachute' " comprises 4 lexical items " ' ", "golden", "parachute" and again "'";
- A document is a piece of information that contains one or more text and/or graphics. A document may be stored in a file on a computer system ;
- A corpus is a set of distinct documents ;
- A vocabulary is the set of lexical items that have at least one occurrence in a corpus ;
- An extract of a text is an ordered sequence of words which is comprised in the text,
- A context of a lexical item in a text is an extract of the text which comprises the lexical item. For example, in the text "The city of Paris is the capital of France. It is also the most visited city in the world", the lexical item "Paris" has a plurality of contexts, such as "Paris is", Paris is the", "Paris is the capital", "of Paris", "city of Paris", The city of Paris", "of Paris is", "The city of Paris is the capital", etc...
- A lexical annotation is a relation that associates the occurrence of a lexical item in a text, or in a context to a unique (e.g. semantic or syntactic) class .

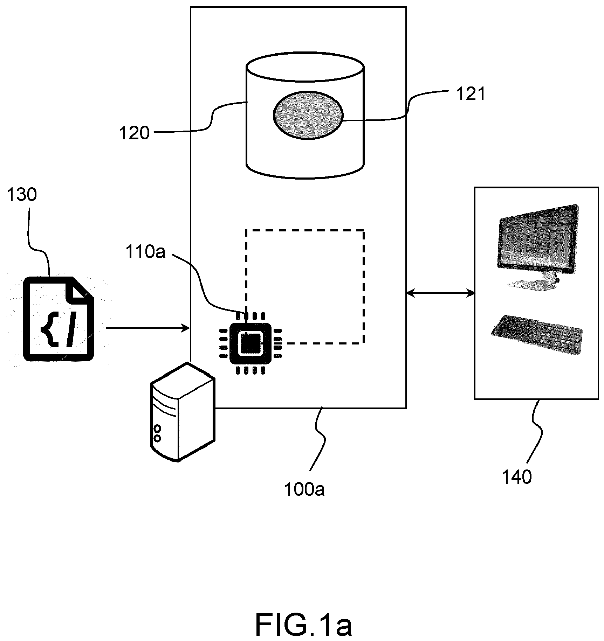

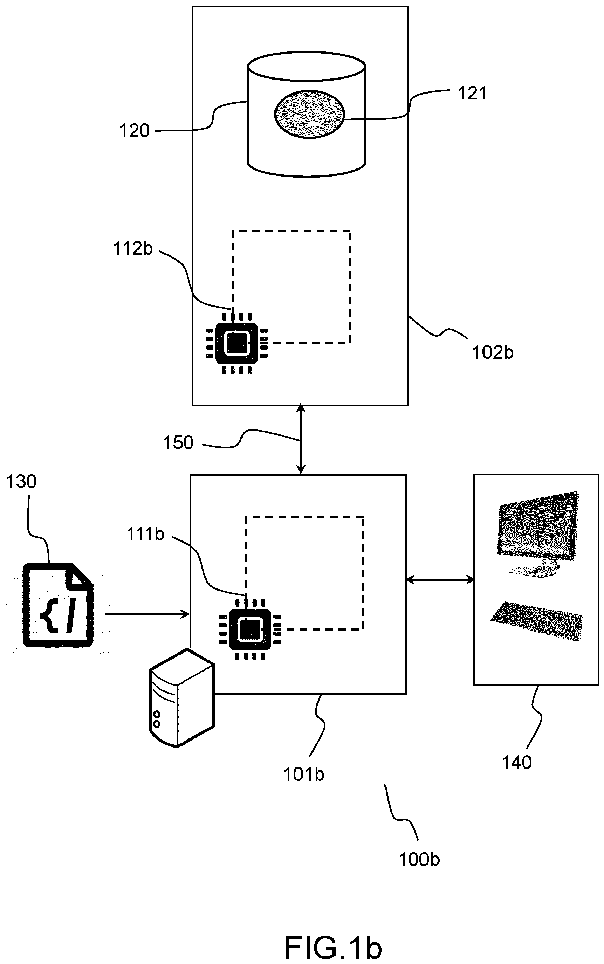

Figure 1a and 1b represent two computing systems for creating or using a tree for classifying lexical item.

The computing system 100a consists in a single computing device. Although represented in figure 1 as a computer, the device 100a may be any kind of device with computing capabilities such as a server, or a mobile device with computing capabilities such as a smartphone, tablet, laptop, or a computing device specifically tailored to accomplish a dedicated task.

The device 100a comprises at least one memory 120. According to various embodiments of the invention, the at least one memory 120 can comprise either volatile or non-volatile memories. Any suitable type of memory can be used, such as DRAM (Dynamic Random-Access Memory), SRAM (Static Random-Access Memory), NVRAM (Non-Volatile Random-Access Memory), flash memory, Solid-state storage, a magnetic tape, an optical disc drive. Any suitable type of memory can be identified by a person skilled in the art.

Although in the example of figure 1a the memory is located in the device 100a, in other embodiments of the invention the computing system can comprise a plurality of devices, and the memory can be located in another device. The at least one memory can be thus be located in the device 100a (it can for example be a hard drive of the computing device 100a), or located remotely, for example in a distant server the device 100a is in connection with. In such case, the access to the memory can comprise any suitable connection means, such as a Ethernet or internet access.

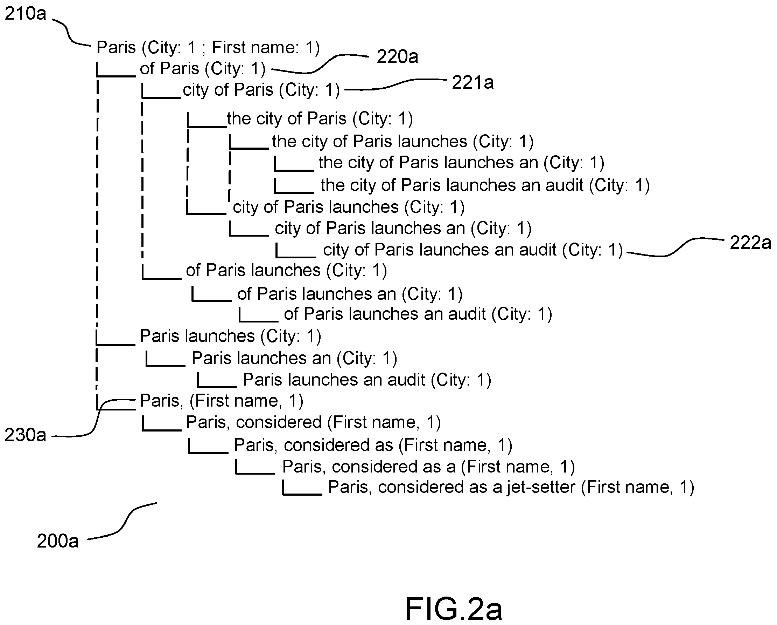

The memory 120 stores at least one tree for classifying lexical items. The structure of the trees will be explained through the examples described with reference to figures 2a to 2c.

The device 100a comprises at least one processing logic 110a. According to to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called "the processing logic". However, it should be noted that the operations of the invention may also be performed in a single processing logic, or a plurality of processing logics, for example a plurality of processors.

The processing logic 110a is configured to obtain a text 130. The text can be received in a number of different ways. For example, it can be stored in a file, received online, entered by a user etc... The text may belong to a larger document. The invention is applicable to texts obtained in virtually any way.

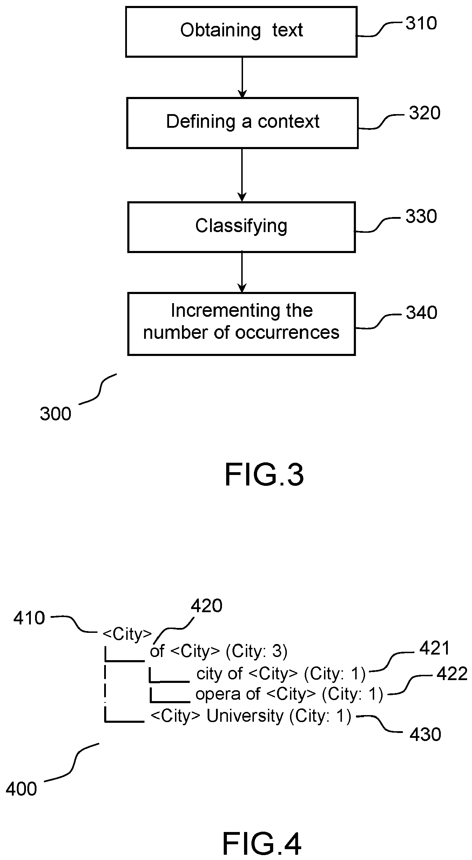

The device 100a is further configured to create and/or use the at least one tree for classifying lexical items. The various embodiments for creating and using the at least one tree for classifying lexical items are respectively disclosed with reference to figures 3 and 4.

The device 100a may be equipped, especially for the creation of the tree, with input and output user interfaces 160, such as a screen, a keyboard and/or a mouse. Any input and output interface that allows displaying information to the user, and allow the user to input information in relation to the displayed information can be used over the course of the invention. For example, a text can be displayed to the user through a screen, and the user can use the mouse and keyboard to select, for a given lexical item, a relevant context and semantic or syntactic class in which the lexical item should be classified, in this relevant context.

As will be explained in more details hereinafter, one of the advantages of the invention is its ability to reduce the amount of computing resources and memory needed to classify lexical items. Thus, the computing system 100a can be a user device such as a personal computer or a tablet.

In the example of figure 1b, the computing system comprises two computing devices 101b and 102b, which comprise respectively at least one processing logic 111b, and at least one processing logic 112b.

The at least one memory 120 is located in the second device 102b, and the first device 101b and the second device 102b are connected through a connexion 150, which may be for example an internet or Ethernet connection.

The at least one processing logics 101b and 102b can handle different parts of the creation and use of the classification tree. In particular, the processing logic 101b can handle the parts relative to the user interface, while the processing logic 102b can handle the actual creation, modification or use of the classification trees 121 stored in the at least one memory 120 in the second device 102b.

The system 100b is typically representative of a client-server architecture, wherein the device 101b is the user device that performs all the tasks relative to client interaction, while the device 102b is a server that performs the core tasks.

Of course, the architecture of figure 1b is provided by means of example only, and other architectures may be used within the invention. For example, the at least one memory 120 may be located in a further device, for example of the device 102b and this further device are two servers that belong to the same server farm.

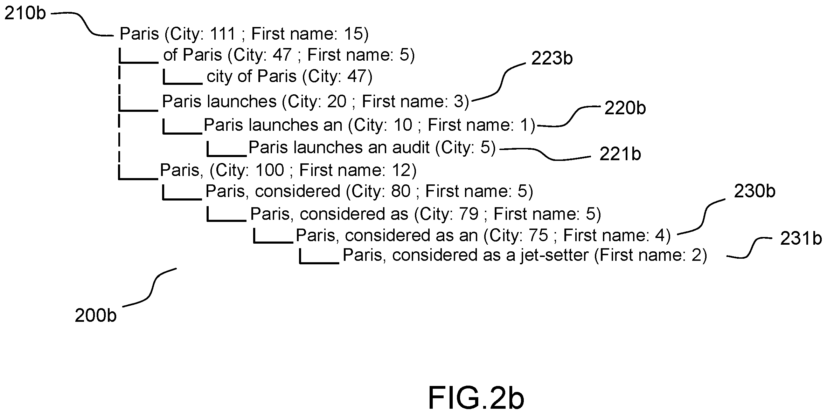

Figures 2a and 2b represent two examples of a tree for classifying a lexical item in a number of embodiments of the invention.

The trees 200a and 200b are two examples of trees for classifying lexical items.

In these examples, the lexical item to classify is the lexical item "Paris".

The trees are thus formed by root nodes 210a, 210b, and successive child nodes, such as for example the children 220a, 221a.

Each node has an ordered sequence of lexical item. For example, the node 210a has the ordered sequence "Paris", the node 220a the ordered sequence "of Paris", the node 221a the ordered sequence "city of Paris", etc...

The ordered sequence of lexical items of the root node of the tree comprises only the lexical item that the tree is intended to classify. For example, the ordered sequence of the nodes 210a and 220a comprise only the lexical item "Paris".

In addition, the ordered sequence of lexical items of in any node of the tree is a strict subset of the ordered sequence of lexical items of any child of said any node. This means that the ordered sequence of a node comprises a part of the ordered sequence of any child node. For example, the sequence "of Paris" of node 220a is a strict subset of the sequence "city of Paris" of the node 221a, and the sequence "Paris" of the root node 210a is a strict subset of both the sequence "of Paris" of node 220a, and the sequence "city of Paris" of node 221a.

Therefore, as shown in figures 2a and 2b, the tree defines contexts of the lexical item to classify ("Paris" in the examples of figure 2a and 2b, and the contexts become longer (and thus more complete/specific) as the depth in the tree increases. For example, the sequence "city of Paris launches an audit in node 222a provides a context of the lexical item "Paris" which is much more long, complete, and less ambiguous than the sequence "of Paris" in node 220a.

In a number of embodiments of the invention, a node comprises an ordered sequence of lexical items which is formed of the concatenation of the ordered sequence of lexical items of its parent node, and an additional lexical item.

For example, the ordered sequence "city of Paris" in node 221a is formed of the concatenation of the lexical item "city" and the ordered sequence "of Paris" of the parent node 220a. As shown in the figures 2a and 2b, the additional lexical item can be concatenate before or after the ordered sequence of the parent node.

This allows defining in the tree an exhaustive tree of all the possible contexts of a lexical item.

In a number of embodiments of the invention, the trees are defined as hierarchically linked nodes. The top node represents either a lexical item associated with a unique class or a set of lexical items associated to a unique class in an empty context. Child nodes are of two kinds, "left" and "right" and are associated to a possible context of occurrence of the related lexical items for the related class. Each left child node adds a unique word to the left of the context represented by its parent node. Each right child node adds a unique word to right of the context represented by its parent node. Therefore:
- the depth of a node, i.e. the number of nodes that must be visited to reach it, is strictly equivalent to the length of the context it encodes;
- the context associated to a node always include the contexts associated to all its parents nodes.

For the sake of intelligibility, all figures of this document show the full context associated to each node, obtained by successively concatenating the words associated with all parents node, with the correct orientation for their type, i.e. left or right. For the same reasons, the trees in the figures are linked to a unique lexical item and their nodes list the classes it might belong to in the associated context. However, on an implementation point of view, the trees are more likely to represent the contexts of all lexical items that belong to an unique class and compete against each other during the disambiguation phase, as will be shown below.

Each node of the tree further comprises a number of occurrences of classifications in one or more classes of said lexical item when belonging to the ordered sequence of lexical items of said each node.

In the examples of figures 2a and 2b, the lexical item "Paris" can be classified as a city, or a first name. Thus, each node comprises the number of occurrences of classification of the lexical item in the context defined by the sequence of lexical item in the node. These numbers of occurrences are represented in parentheses).

For example, in figure 2a, as shown in the node 210a, the lexical item "Paris" has been classified only twice, once as a city and once as a first name.

More generally, the node 220a and its child nodes define the contexts in which Paris has been classified as a city, and the node 230a and its child node define the contexts in which Paris has been classified as a first name.

In the example of figure 2b, as shown in the node 210b, the lexical item "Paris" has been classified as a city 111 times, and as a first name 15 times.

As shown in the node 220b, in the context "Paris launches a", "Paris" has been classified 10 times as a city, and once as a first name, while, as shown in the node 221b, in the more specific context "Paris launches an audit", Paris has been classified 5 times as a city, but has never been classified as a first name.

Thus, based on the previously made classifications, the context "Paris launches a" is still ambiguous for the lexical item "Paris", because Paris has been classified in at least two different classes in this context. On the other hand, with the additional lexical item "audit"', the context becomes "Paris launches an audit" and is unambiguous, because "Paris" has always been classified as a city in this context.

Similarly, as shown by the nodes 230b and 231b, the context "Paris considered as a" is an ambiguous context for Paris, because it has been classified as a city and a first name in this context, while the context "Paris, considered as a jet-setter" is unambiguous, because Paris has been classified only as a first name in this context.

The trees of the invention can therefore be used directly to classify lexical items. Indeed, if, in the current document, at least one unambiguous context is found, the lexical item can be classified in the corresponding class. For example, in a document that states "Paris launches an audit to improve the public transportation", "Paris" can unambiguously be classified as a city, because, one of its contexts in the document is the context of node 221b, that corresponds only to classifications as a city. On the other hand, if the documents states "Paris launches a massive investment plan", "Paris" cannot be unambiguously classified based on the figure 2b, because the context "Paris launches a" is still ambiguous.

The structure of a tree according to the invention provides a number of advantages.

First, it provides a complete transparency regarding the classification rule. Indeed, a user has a transparent overview of the classification rules that have been applied, and can modify the tree to correct the rules in case of misclassification.

In addition, it allows finding the smallest unambiguous contexts for a lexical item.

The context trees can be manually edited. They can potentially represent any lexical item occurrence, in any textual context, for any kind of classification task. They can be derived from more compressed structures such as grammars and some of them may be compressed into such structures.

Furthermore, such context trees require much less annotated data to be created, than other methods of classification such as neural networks. Therefore, they reduce the annotation burden for the user, and can be easily created for specific corpuses, such as medicine thesis or legal decisions.

Finally, these trees can be implemented by using associative arrays based on modern and efficient hash indexes. Therefore, the creation and use of the trees require a limited amount of processing power and memory. Therefore, the trees can be created and used locally on a user device. It is thus not required to use a client-server architecture, the invention allows a complete execution on a local client.

The figure 3 represents an example of a computer-implemented method 300 for constructing a tree for classifying a lexical item according to a number of embodiments of the invention.

The tree to be constructed by the method 300 may either be a pre-existing tree that is being enriched, or a newly created tree.

The method 300 comprises a first step 310 of displaying a text to a user. The text may be displayed for example on a screen.

The method 300 then aims at creating a tree to classify a lexical item of the text. The lexical item is made apparent to the user, for example by being highlighted, so the user is able to understand clearly what is the lexical item to classify, and what is the text around.

In a number of embodiments of the invention, the computer-implemented method further comprises a step of selecting the lexical item to classify.

This may be done in different ways.

In a number of embodiments of the invention, the user selects the lexical item in the previously displayed text, for example by clicking on a word or mouse-selecting a sequence of words.

This allows the user selecting the lexical item he is the most interested to classify, and focusing in priority to these.

In a number of embodiments of the invention, all the lexical items of the texts are iteratively selected, and the subsequent steps of the methods are performed for each lexical item of the text.

This allows a creation of a classification tree for all the lexical items of the text. This is especially efficient for creating a collection of classification trees that allows performing a classification as exhaustive as possible of the lexical items of a vocabulary.

In a number of embodiments of the invention, a lexical item for which no unambiguous classification exist is selected. This may be performed by selecting a lexical item for which no classification tree exist, or for which the classification tree does not allow an unambiguous classification.

As a reminder, an unambiguous classification is obtained if the tree contains at least one node, which comprises a sequence of lexical item that forms a context of the lexical item in the text, and only one class has a non-null number of classifications. For example, if the classification tree for the lexical item "Paris" is the tree 200b, and the text contains "Paris launches an audit for the Olympic Games", "Paris" can be unambiguously classified as a city, because the tree 200b contains the node 221b, wherein the ordered sequence "Paris launches an audit" is a context of "Paris" in the text", and only the class "city" has a non-null number of classification occurrences. On the contrary, if the text contains "Paris launches a massive investment plan for the Olympic Games", "Paris" cannot be unambiguously classified, because all the nodes whose ordered sequence of lexical item form a context of "Paris" in the text have more than one classes with a non-null number of classification occurrences. For example, in the node 220b, "Paris launches a" forms a context of "Paris" in the text, but has been classified as both a city and a first name. In cases even the longest context found in the text for a lexical item is associated with more than one class, a disambiguation may however be done, for example by selecting the class of highest frequency.

This selection of the lexical item is advantageous, because it allows focusing on the lexical items for which an unambiguous classification is not yet achieved. Therefore, the annotation burden for the user is reduced, and an efficient classification of a whole vocabulary can be achieved more quickly.

As the lexical item to classify is selected, the tree can be either retrieved from a collection of classification trees, or, if it does not already exist in the collection created by creating a root node with the lexical item, and added to the collection.

Therefore, a collection of trees for classifying the various lexical items of a vocabulary can be progressively enriched with new trees for classifying a wide number of lexical items of the vocabulary.

The method 300 then comprises a second step 320 of letting the user define an ordered sequence of lexical items of the text comprising said single lexical item.

This step consists in receiving from the user an indication of what is the most relevant context for a lexical item. The user can define this ordered sequence for example using a mouse in the text, or any other input device (keyboard, touchpad, capacitive or resistive touchscreen, ...).

The user can thus define, according to its interpretation of the language, what is the relevant context in the text that actually leads to an unambiguous classification. For example, In the sentence "The city of Paris is the capital city of one of the most beautiful countries of the world, France.", the user may select as a the sequence of lexical item that form a relevant context "The city of Paris is the capital city", although "The city of Paris" or "Paris is the capital city" would also work. The skilled man will readily understand that wider contexts are less ambiguous and lead to smaller error rates but smaller coverage of possible contexts. Coversely, narrower contexts lead to better coverage but are more likely to produce false positive errors. The human annotation therefore embodies some "real world" knowledge that purely automatic methods based on statistics might fail to capture.

This step therefore allows a user to very quickly provide the most relevant context for a given lexical item.

The method 300 further comprises a third step 330 of letting the user classify said lexical item into a class.

This step consists in receiving an input from the user, indicating in which class the lexical item should be classified, in the context defined by the ordered sequence of lexical items previously selected. In practice, the user may enter the name of the relevant class, select the class in a scrolling menu. This class can therefore serve as a label. This input from the user is also called an annotation.

For example, after having selected the context "The city of Paris is the capital city" in the text for the lexical item "Paris", the user indicates that "Paris" should, in this context, be classified as a city.

The class may be selected from a predefined set of classes. New classes may also be added as new lexical items are classified, if the corresponding class does not already exist.

Once the classification has been made, the method 300 comprises a fourth step of incrementing the number of occurrences of said class in a node that comprises said ordered sequence, and in all the parent nodes of said node.

For example, if the tree 200b is used, and the user selected in the text "Paris launches an audit" as the relevant context of "Paris", and then classifies "Paris" as a city, the number of occurrences of classification in city will be incremented in the node 221b which contains exactly the sequence "Paris launches an audit", but also in the parent nodes 220b, 223b and 210b. Thus, a plurality of nodes will be modified with a single input from the user, and these nodes will become:
- Node 210b: "Paris" (city: 112; first name:15) ;
- Node 223b: "Paris launches" (city: 21; first name: 3) ;
   - Node 220b : "Paris launches a" (city: 11; first name: 1) ;
      - Node 221b : "Paris launches an audit" (city: 6).

This allows, with a single annotation from the user, incrementing the classification count in all the relevant contexts. Indeed, if "Paris launches an audit" is a context of Paris in the current text, "Paris", "Paris launches" and "Paris launches a" also are. Therefore, the classification of "Paris" as a city in these contexts can also be incremented. Therefore, this allows optimizing the creation of the tree with a minimal input from the user.

In a number of embodiments of the invention, when the node that comprises said ordered sequence does not already exist, the method 300 comprises prior to the fourth step 340, a step of creating said node, and iteratively creating parent node of said node by removing the first or the last lexical item of the ordered sequence, until a node comprising the modified ordered sequence is found in the tree.

For example, in the example of the figure 2b, if the user selects in the text the ordered sequence "Paris launches a massive investment plan" as the relevant context for the lexical item "Paris", and classify "Paris" as city, as no node in the tree 200b comprises the ordered sequence "Paris launches a massive investment plan", a corresponding node is created. Then a parent node with the context "Paris launches a massive investment" is created (removal of the last lexical item from the ordered sequence), and again a parent node with the context "Paris launches a massive" (removal of the last lexical item from the modified ordered sequence). Then, as the tree already comprises the node 220b with the ordered sequence "Paris launches a", no more node is created. The number of classifications in the class "city" of the corresponding nodes are incremented, and the tree becomes, for the newly created nodes and their parents:
- Node 210b: "Paris" (city: 112; first name:15) ;
   - Node 223b: "Paris launches" (city: 21; first name: 3) ;
      - Node 220b : "Paris launches a" (city: 11; first name: 1) ;
         - New node: "Paris launches a massive" (city: 1) ;
            - New node: "Paris launches a massive investment" (city: 1) ;
               - New node: "Paris launches a massive investment plan" (city: 1).

This allows automatically creating all the relevant nodes with the intermediary contexts, so the tree comprises an exhaustive list of all the relevant contexts.

In a number of embodiments of the invention, all the child nodes of a node allowing an unambiguous classification can be removed from the tree. Indeed, as soon as a node allows an unambiguous classification (i.e has only one class with a non-null number of classification occurrence), it is certain that any child node of this node, corresponding to a more specific context, would also lead to an unambiguous classification in the same class.

Therefore, this allows obtaining the same classification results with a simpler tree, and thus a lower calculation complexity.

Figure 4 represents an example of a tree for type of lexical items in a number of embodiments of the invention.

The contexts of a lexical item of the same type are usually quite similar. For example, in the contexts "city of Paris" or "opera of Paris", Paris should be classified as a city. But this is in general true for any city. For example, the lexical item "Sydney" should be classified as a city rather than as a first name in the contexts "city of Sydney" or "opera of Sydney".

In order to provide trees for classifying yet unknown lexical items of a defined type, it is possible to fuse trees for classifying lexical items ion the same class as a prototype tree as follows.

First, at least one tree for classifying a lexical item is selected. It may be for example trees for classifying "Paris", "Sydney" or "Porto", wherein the root node of each of these tree contain respectively the lexical items "Paris", "Sydney" or "Porto", and at least one classification as a city.

Then, in each of the selected trees, the lexical item is replaced by an indication of the position of the lexical item.

For example, in the example of figure 4, the prototype tree 400 is obtained from a tree for classifying "Paris". The initial tree was:
- Node 410: "Paris" (city:4)
   - Node 420: "of Paris" (city:3)
      - Node 421: "city of Paris" (city : 1)
      - Node 422 : "opera of Paris" (city:1)
   - Node 430: "Paris university" (city:1)

Then, the lexical item "Paris" is replaced by an indication that a lexical item classified as a city was present at the position, thereby leading to the tree 400, which can be used to classify any city.

This allows classify lexical items that has not yet be encountered and/or use a large tree from the lexical item with an important number of occurrences to classify lexical items of the same class, which as a low number of occurrences, and thus for which a specific tree would not contain a lot of information.

Such prototype trees can also be fused, for example by fusing trees similar to the tree 400, obtained for different lexical item. For example, prototype trees obtained from the trees for the lexical items "Paris", "Porto and "Sydney" can be fused into a single prototype tree for classifying cities.

For example, the three trees for the lexical items "Paris", "Marseille" and "Avignon": 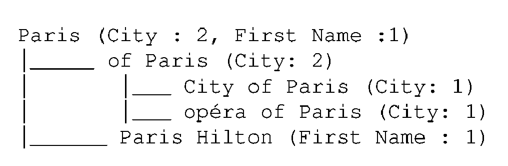 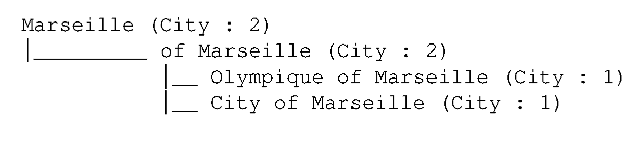 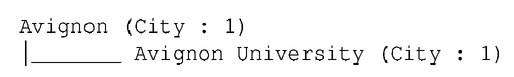 May be fused into the following prototype tree:

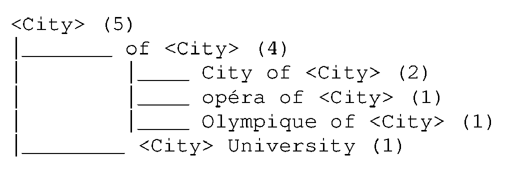

This allows combining all the knowledge from different trees within a single one to obtain the best prototype tree for classifying lexical items in a defined class. Most importantly, this allows building a tree corresponding to a class, e.g. <City>, populated it with the contexts of some instances (e.g. Paris, Marseille, Avignon, ...) and enlarge the set of class instances with very large lexicons (e.g. city names of open street map).

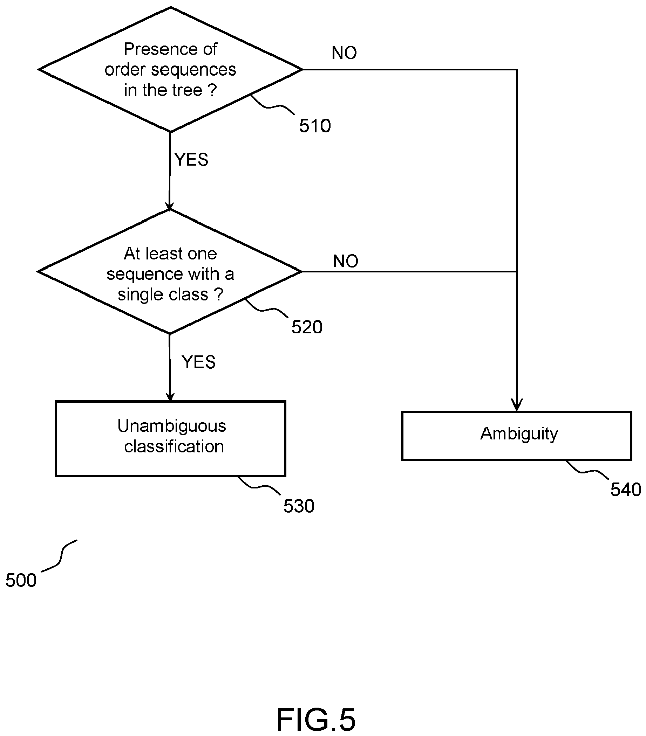

Figure 5 represents an example of a computer-implemented method for using a tree for classifying a lexical item according to a number of embodiments of the invention.

The method 500 aims at classifying a lexical item in a text.

The lexical item may be either selected by the user, or automatically selected in the text. For example, the method may be used to iteratively classify all the lexical items of a text.

Of course, even if the method 500 is exemplified with the classification into a single class using a single tree, it could be used for multi-class classification, by using a plurality of different trees for a plurality of class respectively.

The method 500 comprises a first step 510 of verifying the presence or absence, in the text, of one or more ordered sequences of lexical items respectively comprised in one or more node of the tree.

This step consists in verifying if the text comprises one of the sequences defined in the nodes of the tree, that is to say if a context of the lexical item in the text corresponds to a node in the tree. For example, if the tree is the tree 200a for classifying the lexical item "Paris", this may consist in identifying whether one of the contexts "of Paris", "city of Paris", etc... is found in the text for this lexical item.

This may be done in different ways. For example, a test of presence of each of the ordered sequences can be performed.

Alternatively, the tests of presence of ordered sequences can be performed in depth-first order while sequences are present. In practice, for the tree 200a, this would mean testing the presence of the ordered sequence "of Paris"; if the sequence "of Paris" is present, testing the sequence "city of Paris; otherwise, if the sequence "of Paris" is absent, testing the sequence "Paris launches" etc... iteratively, until having identified all the sequences which are present. Indeed, if a sequence in a node is not present in the text, by the construction of the tree, all the sequences in child nodes will not be present either. This therefore allows obtaining a list of all the sequences that form a context of the lexical item in the text, and the corresponding nodes, with a minimal number of tests.

If no node exists, with such an ordered sequence, this means that there is no context in the text, in which the lexical item has already been classified. Therefore, it cannot be classified unambiguously, and an ambiguity is raised at step 540.

Otherwise, for each node and each context, the number of classes for which at least one classification has been made is determined, and the method 500 comprises a step of verifying if at least one of said nodes has a single class with a non-null number of classification occurrences. Indeed, this means that, in at least one of the contexts of the lexical item in the text is associated with classification in only one class.

For example, in the text "Paris launches an audit about taxes", using the tree 200b, 4 nodes comprise an ordered sequence which is a context of "Paris" in the text:
- Node 210b : sequence "Paris"; two classes (city, first name) have a non null number of classifications ;
- Node 223b : sequence "Paris launches"; two classes (city, first name) have a non null number of classifications ;
- Node 220b : sequence "Paris launches a"; two classes (city, first name) have a non null number of classifications ;
- Node 221b : sequence "Paris launches an audit"; only one classes (city) has a non null number of classifications ;

Therefore, because "Paris launches an audit" is a context of "Paris" in the text, and this context is associated to classifications only in the class city, "Paris" can be classified unambiguously as a city.

Therefore, if the presence of said one or more sequences is verified, and if at least one of said one or more node of the tree has a single class with a non-null number of classification occurrences, the method 500 comprises a step of classifying said lexical item in said single class. Otherwise, an ambiguity remains at step 540.

Depending on the output of the method (unambiguous classification 530, or ambiguity 540), the output of the method can be indicated to the user, for example by indicating the output of the classification, or indicating that there is an ambiguity. In case of ambiguity, or error in the classification, the user can easily inspect the classification tree, in order to verify what were the classification rules, and correct if necessary.

The trees of the invention are also able, not only to solve the problem of classification, but also to address the well-known problem of lexical item segmentation, also known as tokenisation, i.e. splitting a text into a sequence of non overlapping lexical items. Indeed, this task is not as straightforward as it sounds. In order to describe the algorithm and related data structure, let us consider the following sentence:
*"My brother is head over heels for his new girlfriend".*

There is at least to alternative segmentations of the sentence:
- *"My", "brother", "is", "head", "over", "heels", "for", "his", "new", "girlfriend";*
- *"My", "brother", "is", "head over heels", "for", "his", "new", "girlfriend".*

The first alternative might lead to a literal and rather comic interpretation. Fortunately for the brother, the second alternative is more likely to associate the lexical item *"head over heels"* with the meaning *"deeply in love".*

Let us assume that there exists a context tree for the class *<body>* and that the lexical items *"head"* and *"heels"* are possible instances of this class. Let us assume that there is also a context tree for the class *<idiom>* and that the lexical item *"head over heels"* is a possible instance of it.

Lexical items may be represented as context-free trees. For instance, *"head over heels"* can be represented by the following triple tree:

```
 head (False)
 |- head over (False)
      |- head over heels (True)
      over (False)
 |- head over (False)
      |- head over heels (True)
      heels (False)
 |- over heels (False)
      |- head over heels (True)
```

Each node is associated to a boolean value that indicates whether the related word sequence should be considered as the lexical item (True) or a part of the lexical item (False). Such context-free trees allow determining whether a word may be considered as a larger lexical item. For example, the above tree makes apparent that the word *"head"* may be a part of the larger lexical item *"head over heels".* Therefore, the number of classification occurrences will be considered for both the lexical item *"head'* and the lexical item *"head over heels".*

Now, let assume the class *<body>* is linked to a large context tree that specifies all the contexts where *"head"* and *"heels"* actually refers to body parts and that the class *<idiom>* is linked to a large context tree that specifies all the contexts where *"head over heels"* actually refers to an idiom.

The disambiguation algorithm processes all words occurrences in the sentence. The processing of a word is broken down into the following steps:
1. Build the set of all known lexical items that overlap the word occurrence in the context of the sentence. In the example above, the occurrence of *"head"* will be associated with the set {*"head', "head over heels"*}. However this occurrence will not be associated with possibly known lexical items (e.g. *"department head"*) that do not match the context of occurrence. Similarly, *"over"* will be associated with the set {*"head over heels"*} and *"heels"* with {*"heels", "head over heels"*};
2. Use the context trees to compare all potential lexical items overlapping the occurrence. In the example above, the occurrence of *"head"* will be annotated as *<body>* or as a part of *<idiom>.* The decision is taken according to a highest likelihood criterion based on node frequencies. Stated otherwise, the lexical item that corresponds to the larger number of classifications will be considered as defining the most relevant segmentation. In the example above, the occurrence of *"head"* will be annotated as part of *<idiom>* if *<idiom>* is more likely to occur in the context *"brother is head over heels for his"* than *<body>* is likely to occur in the context *"brother is head over heels".* Stated otherwise, the relative probabilities of classifications can be, for improving the segmentation efficiency, evaluated based on comparable context, i.e contexts in which the same number of words is added to the right and left of the lexical unit to classify. In the present case, there will be likely be no classification of "head" as "body" in the context *"brother is head over heels",* while there should be classifications of *"head over heels"as "idiom"* in the context *"brother is head over heels for his".* Therefore, the word *"head'* will be considered as a part of the larger lexical item *"head over heels",* classified as *"idiom" ;*
3. When a word occurrence has been annotated as part of a larger lexical item, successive parts of the occurrence of this lexical item are concatenated and therefore ignored by the disambiguation algorithm. Therefore, in the present case the segmentation will consider *"head over heels"* as a single lexical item. *"over"* and *"heels"* are therefore not classified ;
4. The processing is restarted at step 1 for the occurrence immediately following the current annotated lexical item. In the present example, it will start again at the lexical item *"for".*

The examples described above are given as non-limitative illustrations of embodiments of the invention. They do not in any way limit the scope of the invention which is defined by the following claims.

## Claims

1. A computer-implemented method (300) for constructing a tree (200a, 200b) for classifying a lexical item, wherein:
- each node of the tree has an ordered sequence of lexical items ;
- the ordered sequence of lexical items of the root node (210a, 210b) of the tree comprises only said lexical item ;
- the ordered sequence of lexical items of in any node of the tree is a strict subset of the ordered sequence of lexical items of any child of said any node;
- each node of the tree further comprises a number of occurrences of classifications in one or more classes of said lexical item when belonging to the ordered sequence of lexical items of said each node ;
and said method comprising:
- displaying a text comprising said lexical item to a user (310) ;
- letting the user define an ordered sequence of lexical items of the text comprising said single lexical item (320), and classify (330) said lexical item into a class;
- incrementing (340) the number of occurrences of said class in a node that comprises said ordered sequence, and in all the parent nodes of said node.

2. The computer-implemented method of claim 1, further comprising, prior to letting the user define an ordered sequence of lexical items of the text comprising said single lexical item (320), a step of selecting said lexical item.

3. The computer-implemented method of claim 2, wherein said step of selecting said lexical item is performed by letting the user select said lexical item in the text.

4. The computer-implemented method of claim 2, wherein said step of selecting said lexical item is performed by iteratively selecting all the lexical items of said text.

5. The computer-implemented method of claim 2, wherein said step of selecting said lexical item is performed by selecting said lexical item as a lexical item in the text, for which no classification exist, or for which the tree does not comprise any node comprising a sequence of lexical items which is a context of said lexical item in the text, and only one class as a non-null number of classification occurrences.

6. The computer-implemented method of one of claims 1 to 5, wherein the tree is retrieved from a collection of tree or, if it does not exist in said collection of trees, created by adding a root node with said lexical item, and added to said collection of trees.

7. The computer-implemented method of one of claims 1 to 6, wherein each node of the tree but the root node comprises an ordered sequence of lexical items which is formed of a concatenation of the ordered sequence of lexical items of the parent node of said each node, and an additional lexical item.

8. The computer-implemented method of claim 7, wherein, if the node that comprises said ordered sequence does not exist in the tree, the method comprises, prior to incrementing the number of occurrences of said class in a node that comprises said ordered sequence:
- creating said node that comprises said ordered sequence ;
- iteratively removing the first or the last lexical item of said ordered sequence, and creating a parent node with said ordered sequence, until an existing node comprising the modified ordered sequence is found in the tree.

9. The computer-implemented method of one of claims 1 to 8, further comprising, if the tree comprises a node having only one class with a non-null number of classification occurrences, a step of removing all the child nodes of said node having only one class with a non-null number of classification occurrences.

10. The computer-implemented method of one of claims 1 to 9, further comprising performing a creation of a prototype tree for classifying any lexical item in a class, said creation comprising replacing in each ordered sequence in each node said lexical item by an indication of a position of a lexical item of said class.

11. The computer-implemented method of claim 10, further comprising fusing a plurality of prototype trees into a fused prototype tree.

12. A computer-implemented method (500) for using a tree (200a, 200b) for classifying a lexical item in a text, wherein:
- each node of the tree has an ordered sequence of lexical items ;
- the ordered sequence of lexical items of the root node (210a, 210b) of the tree comprises only said lexical item ;
- the ordered sequence of lexical items of in any node of the tree is a strict subset of the ordered sequence of lexical items of any child of said any node;
- each node of the tree further comprises a number of occurrences of classifications in one or more classes of said lexical item when belonging to the ordered sequence of lexical items of said each node ;
and said method comprising:
- verifying (510) the presence or absence, in the text, of one or more ordered sequences of lexical items respectively comprised in one or more node of the tree ;
- if the presence of said one or more sequences is verified, and if at least one of said one or more node of the tree has a single class with a non-null number of classification occurrences (520), classifying (530) said lexical item in said single class.

13. A computer-implemented method according to claim 12 for segmenting lexical units of said text, comprising:
- using a first tree for classifying a first lexical unit of the text;
- using a second tree for classifying a second lexical unit of the text, said second lexical unit being a strict superset of said first lexical unit;
- if a number of occurrences of classification of the second lexical unit is higher than a number of occurrences of classification of the first lexical unit, segment the second lexical unit as a single lexical unit of the text.

14. Computer program product comprising computer code instructions for executing a method according to one of claims 1 to 13.

15. A computing system (100a, 100b) comprising:
- at least one memory (120) storing at least one tree (121) for classifying lexical items, wherein:
- each node of the tree has an ordered sequence of lexical items ;
- the ordered sequence of lexical items of the root node (210a, 210b) of the tree comprises only said lexical item ;
- the ordered sequence of lexical items of in any node of the tree is a strict subset of the ordered sequence of lexical items of any child of said any node;
- each node of the tree further comprises a number of occurrences of classifications in one or more classes of said lexical item when belonging to the ordered sequence of lexical items of said each node;
- at least one processing logic (110a, 111b, 112b) configured to execute a method according to one of claims 1 to 13.
